Europäisches Patentamt

European Patent Office

Office européen des brevets

(11) Numéro de publication: **0 1 1 5 464**
**B1**

(12) **FASCICULE DE BREVET EUROPEEN**

(45) Date de publication du fascicule du brevet:
**20.11.86**

(21) Numéro de dépôt: **84400208.9**

(22) Date de dépôt: **31.01.84**

(51) Int. Cl.⁴: **B 62 D 5/06**

(54) **Dispositif de commande hydraulique, notamment de direction assistée.**

(30) Priorité: **01.02.83 FR 8301522**

(43) Date de publication de la demande:
**08.08.84 Bulletin 84/32**

(45) Mention de la délivrance du brevet:
**20.11.86 Bulletin 86/47**

(84) Etats contractants désignés:
**BE DE GB IT NL**

(56) Documents cités:
**DE - B - 2 946 274**
**FR - A - 2 188 074**
**FR - A - 2 205 875**
**FR - A - 2 321 417**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Trintignac, Christian, 15 A, boulevard de la**
**Marne, F-94130 Nogent Sur Marne (FR)**
Inventeur: **Jaccod, Jean-Claude, 66, rue de Mezy,**
**F-94500 Champigny (FR)**

(74) Mandataire: **Ernst-Schonberg, Michel et al, R.N.U.R.**
**S. 0804 B.P. 103 8 & 10, avenue Emile-Zola,**
**F-92109 Boulogne Billancourt (FR)**

ACTORUM AG

## Description

L'invention concerne un dispositif de commande hydraulique notamment de direction assistée comprenant une distribution électrohydraulique commandé par deux électrovannes qui communique par l'intermédiaire de deux conduits de travail respectivement avec l'une ou l'autre des deux chambres d'un vérin à double effet ainsi que par l'intermédiaire d'un conduit de raccordement avec un réservoir et qui comporte un tiroir mobile dans un corps de valve, ce tiroir délimitant avec le corps de valve deux chambres d'extrémité respectivement alimentées par une pression de pilotage asservie à l'état ouvert ou fermé de l'une des deux électrovannes.

On connaît par le document FR-A-2 188 074 un tel dispositif dans lequel la pression de la pompe est modifiée par un potentiomètre hydraulique du type incluant un étranglement variable soumis à un signal proportionnel au couple de manœuvre du volant et dans lequel la pression d'assistance est consécutive au déplacement du tiroir consécutif à une élévation de la pression lors de la fermeture de l'étranglement.

Dans ce dispositif la position de repos du tiroir est assurée par des ressorts dont le déséquilibre occasionne une pression d'assistance parasite nuisible à la tenue en cap du véhicule.

Selon un agencement connu par le brevet FR-A-2 321 417 le distributeur qui peut être une valve à tiroirs ou encore une valve rotative, est sensible à l'application d'un couple à l'arbre de direction pour créer une différence de pression entre les deux chambres du vérin et pour produire une force d'assistance qui est transmise à la crémaillère pour faciliter l'actionnement de la direction du véhicule par l'intermédiaire de l'arbre de direction et du pignon de commande de la crémaillère.

Lorsqu'aucun couple n'est appliqué à l'arbre de direction, la valve est dans sa position de repos et la pression est la même dans les deux chambres du vérin ce qui correspond à une force d'assistance ayant une valeur nulle.

Selon un agencement connu par le brevet FR-A-2 470 883, le tiroir du distributeur est également sollicité vers sa position neutre par la pression régnante dans deux chambres de commande qui sont chacune en communication avec la canalisation d'une pompe pilote réglable à l'aide d'un organe d'actionnement manuel, et par l'intermédiaire d'un équipement à soupape de retenue, avec une pompe principale.

Dans le but d'accroître le temps de réponse du vérin un agencement du tiroir du distributeur prévoit des passages d'étranglement qui font communiquer une chambre de commande du tiroir avec le conduit de raccordement du distributeur au réservoir.

D'autres types de direction assistée abaissent le taux d'assistance aux vitesses élevée ou ne font agir l'assistance que dans une plage de vitesses faibles ou lors des manœuvres de parcage. Une direction connue par le brevet FR-A-2 434 744 reçoit une assistance dans une plage de vitesses déterminée et utilise une commande électronique de traitement de signaux élaborés par des capteurs de vitesse et de couple. La commande électronique aura avantageusement une structure de calculateur et de microprocesseur qui pourra réaliser des fonctions multiples à partir d'un programme déterminé.

A cet effet, selon l'invention le tiroir mobile est sollicité dans une position neutre uniquement par la pression de refoulement d'une pompe et les deux électrovannes sont commandées par les signaux traités par la commande électronique, dont l'établissement agit sur le tiroir dans le sens d'un étranglement du débit qui fait communiquer une voie d'alimentation du distributeur et d'un conduit de travail à partir de la pompe avec un conduit de raccordement du distributeur au réservoir.

Suivant une forme de réalisation particulièrement simple, il est prévu pour former deux passages d'étranglement, deux rainures annulaires exécutées à la périphérie du tiroir qui sont limitées par deux épaulements axialement espacés susceptibles de laminer le fluide entre une voie d'alimentation du distributeur et le conduit de raccordement avec le réservoir.

L'invention est maintenant décrite à titre d'exemple en se référant au dessin dans lequel:

Fig. 1 est une représentation schématique du dispositif de commande hydraulique;

fig. 2 est une représentation schématique de la direction assistée utilisant le dispositif;

fig. 3 représente une forme de réalisation de la commande électronique.

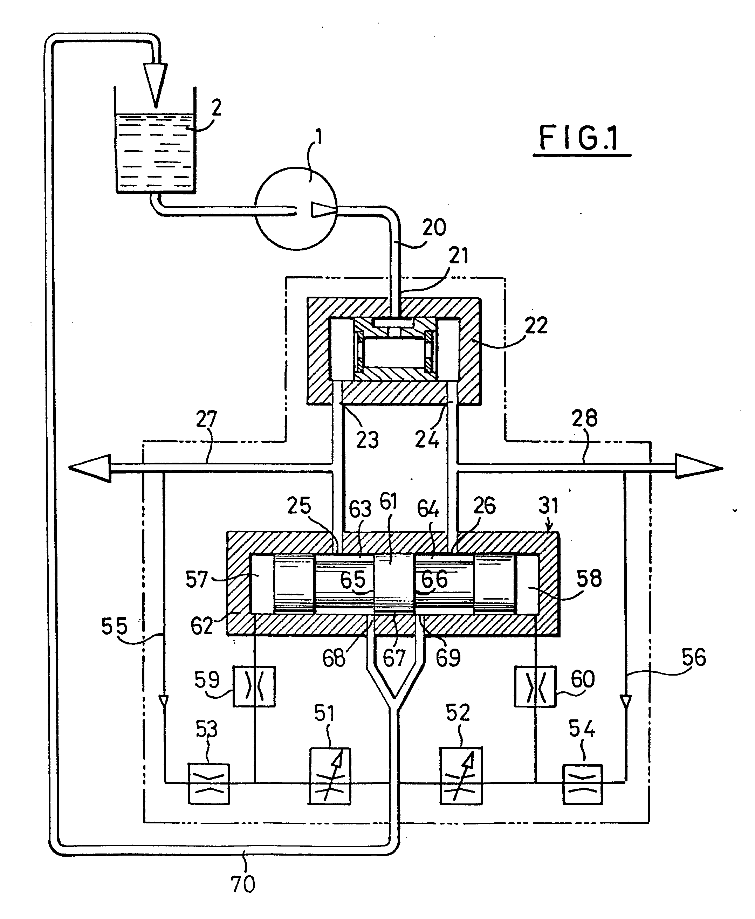

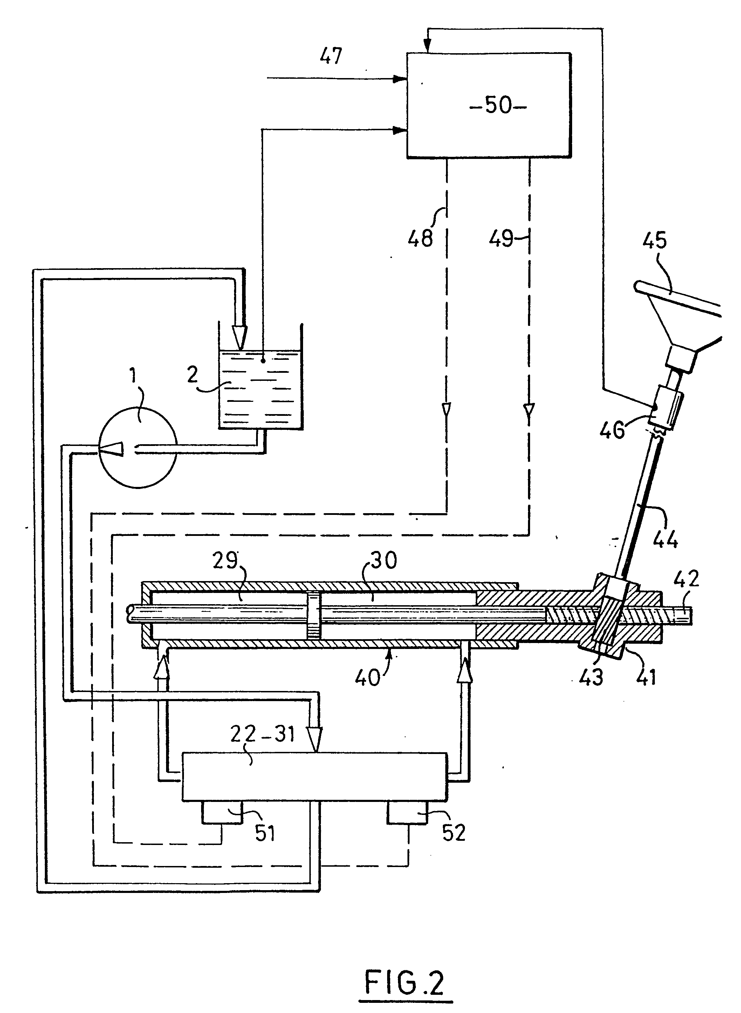

Le dispositif illustré aux fig. 1 et 2 comprend une pompe à débit constant 1 qui véhicule le fluide hydraulique à partir d'un réservoir 2. L'orifice de sortie de la pompe est raccordé par un conduit 20 à l'orifice d'entrée 21 d'un diviseur de débit 22 ayant des orifices de sortie 23, 24 entre lesquels le débit de fluide est divisé. L'orifice de sortie 23 communique avec l'orifice d'entrée 25 du distributeur électrohydraulique ou valve 31 et avec un conduit de travail 27 relié à la chambre 29 d'un vérin 40 à double effet. De même l'orifice 24 communique avec un autre orifice d'entrée 26 du distributeur 31 et avec un conduit de travail 28 relié à l'autre chambre 30 du vérin 40.

Le vérin 40 fait partie ainsi que cela est connu d'un boîtier de direction 41 dans lequel se déplace une crémaillère 42 montée à l'extrémité de la tige du vérin 40. La crémaillère 42 engrène avec son pignon de commande 43 monté à l'extrémité d'un arbre de direction 44 actionné par un volant 45. L'arbre de direction 44 porte un capteur de couple 46 qui délivre des signaux à une commande électronique de traitement 50. La commande électronique 50 peut également recevoir les informations sur la température d'huile et sur la vitesse du véhicule amenées par deux voies d'entrée et provenant des capteurs de température et de capteurs tachymétriques ou autres de façon à commencer le traitement des signaux de sortie, de commande des électrovannes du distributeur 31 lorsque le véhicule roule par exemple à moins de 5 km/h et lorsque l'huile possède la viscosité optimale. Dans cette plage de vitesses, qui est habituellement celle des manœuvres de parcage, un signal produit dans le capteur de couple 46 au cours de la rotation de l'arbre de direction 44 détermine en sortie de la commande électronique 50, une impulsion de commande qui parvient par l'une des voies de sortie 48, 49 à l'une ou l'autre des électrovannes ou régulateurs de débit réglables 51, 52 à commande électrique normalement fermés en l'absence de tension de commande. Les régulateurs de débit réglables 51, 52 sont insérés dans un circuit hydraulique de pilotage disposé entre deux régulateurs à debit fixe 53, 54 respectivement alimentés par un conduit de pilotage 55, 56 raccordé au conduit de travail 27, 28. Les régulateurs à débit réglables 51, 52 branchés sur le conduit de raccordement 70 au réservoir 2 sont disposés respectivement en parallèle avec deux chambres de pilotage 57, 58, limitées par les extrémités du tiroir 61, et alimentées au travers de régulateurs de débits 59, 60. Le tiroir 61 mobile dans le corps 62 du distributeur 31 possède à sa périphérie deux rainures annulaires 63, 64 respectivement limitées par deux épaulements 65, 66 axialement espacés par une portée 67. Le corps 62 du distributeur possède deux orifices de travail 68, 69 qui débouchent respectivement dans les rainures 63, 64 au contact des épaulements 65, 66. Les orifices de travail 68, 69 sont respectivement raccordés par le conduit 70 avec le réservoir 2.

Le fonctionnement de la commande hydraulique apparaîtra à l'étude de la fig. 1.

Si l'on tourne le volant 45, le capteur de couple 46 envoie une information $U_1$ ou $U_2$ à la commande électronique 50 qui élabore un signal de commande du régulateur 51 ou 52 suivant le sens de braquage désiré.

Supposons que le signal commande le régulateur 51 et que le régulateur 52 reste fermé. Le débit dans le conduit de pilotage 56 est nul. La pression dans la chambre de pilotage 58 est égale à la perte de charge au travers de l'orifice 69. L'ouverture du régulateur 51 crée un débit dans le conduit de pilotage 55.

Le tiroir 61 est déséquilibré et se déplace vers la gauche de la figure du fait d'une chute de pression dans la chambre de pilotage 57 occasionnée par l'ouverture du régulateur 51.

Le laminage du fluide hydraulique augmente donc au travers de l'orifice de travail 68 qui est partiellement (ou totalement) obstrué. La pression dans le conduit de travail 27 augmentant alors, la pression et donc le débit augmentent également dans le conduit de pilotage 55. Lorsque la pression dans la chambre de pilotage 57 due au laminage du fluide au travers du régulateur 51 redevient égale à la pression dans la chambre de pilotage 58, le tiroir 61 est rééquilibré. On a alors un deuxième état d'équilibre pour lequel il y a une pression d'assistance dans la chambre 29 du vérin.

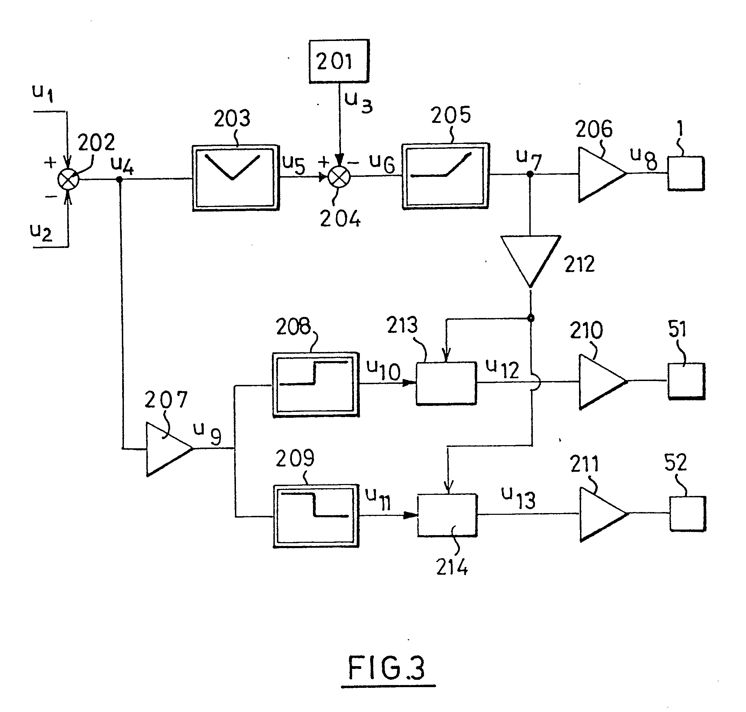

On notera qu'en cas de panne de la commande électronique 50, les régulateurs 51 et 52 sont fermés; par voie de conséquence le tiroir 61 reste en équilibre. Le vérin 40 demeure sans effet et le mécanisme de direction ne reçoit pas d'effort d'assistance. A la fig. 3, on a représenté plus en détail la commande qui permet de réaliser les fonctions suivantes:

– d'une part, créer, à partir d'informations $U_1$ et $U_2$ délivrées par le capteur de couple selon le sens de rotation du volant, un signal électrique de commande de pression qui soit également au moins fonction de la vitesse du véhicule fournie par un détecteur 201 émettant une tension électrique $U_3$ fonction de la vitesse;

– d'autre part, d'élaborer à partir des informations $U_1$ et $U_2$, des signaux de commande, des bobinages des régulateurs 51, 52 de sélection de sens d'application de la pression d'assistance.

Les tensions $U_1$ et $U_2$ sont donc mises en opposition sans un comparateur 202 dont la tension de sortie $U_4$ est admise à l'entrée d'un réseau 203 chargé d'élaborer une tension de sortie $U_5$ égale à la valeur absolue de la différence entre les tensions $U_1$ et $U_2$: elle est donc l'image de l'intensité du couple appliqué au volant par le conducteur.

Cette tension $U_5$ est comparée par un organe 204 à la tension $U_3$ émise par au moins le détecteur de vitesse 201 et la tension résultante $U_6$ est introduite dans un réseau 205 dont la tension de sortie $U_7$ reste nulle tant que la tension $U_6$ est négative et proportionnelle à $U_6$ dans le cas contraire. Un amplificateur de puissance 206 permet au besoin d'élaborer la tension $U_8$ de commande de la pression de refoulement du groupe de génération hydraulique 1.

On voit donc que pour une intensité de couple appliqué au volant, représentée par la tension $U_5$, la tension de commande de la pression de refoulement de la pompe hydraulique, représentée par $U_8$ ou $U_7$ sera d'autant plus faible que la vitesse du véhicule sera élevée. On peut même concevoir qu'à partir d'une certaine vitesse il n'y ait plus d'assistance.

Cette réalisation des organes permettant de diminuer la pression d'assistance lorsque la vitesse du véhicule s'élève, particulièrement économique compte-tenu de la technologie actuelle, n'est cependant pas la seule possible. Ainsi les tensions $U_3$ et $U_5$ pourraient être introduites dans un organe multiplicateur élaborant une tension de sortie, fournie à l'amplificateur de puissance 206, proportionnelle au produit des tensions $U_3$ et $U_5$, cette tension $U_3$, étant alors inversement proportionnelle à la vitesse du véhicule.

Selon un premier type de capteur de couple appliqué, la tension $U_4$ reste nulle tant que l'on n'a pas dépassé un couple minimal.

La tension $U_4$ élaborée par le comparateur 202 est également introduite à l'entrée d'un amplificateur à gain élevé 207 dont la tension de sortie $U_9$ est égale à sa valeur de saturation. Cette tension est appliquée aux entrées de deux réseaux 208 et 209, le premier ne fournissant une tension de sortie que pour les valeurs positives du $U_9$, le second que pour les valeurs négatives.

La tension $U_7$, amplifiée par l'amplificateur tout ou rien 212 est appliquée à deux organes logiques ET à deux entrées notés respectivement 213 et 214, les tensions appliquées aux secondes entrées de ces organes étant respectivement $U_{10}$ et $U_{11}$ qui sont les tensions de sortie des réseaux 208, 209. Ainsi, l'organe 213 ne fournira une tension de sortie $U_{12}$ que si la tension $U_9$ est positive et la consigne de commande de la pression de refoulement non nulle, et de même pour l'organe 214. Ce sont donc finalement ces tensions $U_{12}$ et $U_{13}$ qui alimenteront les amplificateurs de puissance 210 et 211 commandant les régulateurs 51, 52.

On notera que des capteurs additionnels de température d'huile peuvent apporter des corrections souhaitées à l'une des tensions de sortie $U_5$ ou $U_7$ des réseaux 203 ou 205.

## Revendications

1. Dispositif de commande hydraulique notamment de direction assistée comprenant une distribution (31) électrohydraulique commandé par deux électrovannes (51, 52) qui communique par l'intermédiaire de deux conduits de travail (27, 28) respectivement avec l'une ou l'autre des deux chambres (29, 30) d'un vérin (40) à double effet ainsi que par l'intermédiaire d'un conduit de raccordement avec un réservoir (2) et qui comporte un tiroir (61) mobile dans un corps de valve (62) ce tiroir (61) délimitant avec le corps de valve (62) deux chambres d'extrémité (57, 58) respectivement alimentées par une pression de pilotage asservie à l'état ouvert ou fermé de l'une des deux électrovannes (51, 52), caractérisé par le fait que le tiroir mobile est sollicité dans une position neutre uniquement par la pression de refoulement d'une pompe et que les deux électrovannes sont commandées par les signaux traités par une commande électronique (50) et dont l'établissement agit sur le tiroir (61) dans le sans d'un étranglement du débit qui fait communiquer une voie d'alimentation du distributeur et d'un conduit de travail (27, 28) à partir de la pompe (1) avec le conduit de raccordement (70) avec le réservoir (2).

2. Dispositif selon la revendication 1, caractérisé par le fait que le vérin (40) est monté de manière connu en soi à l'extrémité d'un boîtier de direction à cémaillère (42) actionnée par l'intermédiaire d'un pignon (43) monté sur un arbre de direction (44) qui porte au moins un capteur de couple (46) délivrant une première série des signaux à la commande électronique (50) tandis qu'un capteur de la vitesse du véhicule délivre une deuxième série des signaux à la même commande électronique dont l'effet est de diminuer la consigne de commande des électrovannes (51, 52) lorsque la vitesse du véhicule augmente.

3. Disposition à crémaillère selon la revendication 2, caractérisé par le fait que le signal de commande des électrovannes (51, 52) du distributeur (31) est nul tant que le couple détecté sur l'arbre de direction n'a pas atteint une valeur fonction croissante de la vitesse du véhicule.

## Patentansprüche

1. Hydraulische Kontrolleinrichtung für eine Servolenkung mit einem von zwei Elektroventilen (51, 52) gesteuerten elektrohydraulischen Verteiler (31), der über zwei Arbeitsleitungen (27, 28) mit der einen bzw. der anderen von zwei Arbeitskammern (29, 30) eines doppelt wirkenden Druckzylinders (40) sowie über eine Verbindungsleitung mit einem Vorratsgefäss (2) in Verbindung steht und der einen in einem Ventilkörper (62) beweglich angeordneten Schieber (61) aufweist, wobei der Schieber (61) zusammen mit dem Ventilkörper (62) zwei endseitige Kammern (57, 58) begrenzt, die jeweils mit einem geregelten Steuerdruck beaufschlagt werden im offenen bzw. geschlossenen Zustand eines der beiden Elektroventile (51, 52), dadurch gekennzeichnet, dass der bewegliche Schieber in einer neutralen Stellung ausschliesslich vom Förderdruck einer Pumpe beaufschlagt ist und dass die beiden Elektroventile von Signalen gesteuert werden, die von einer elektronischen Steuereinheit (50) verarbeitet werden, deren Auftreten auf den Schieber (61) in Richtung einer Verringerung der Strömung wirkt, die einen Versorgungsweg des Verteilers und eine Arbeitsleitung (27, 28), die von der Pumpe (1) ausgeht, mit der Verbindungsleitung (70) und mit dem Vorratsgefäss (2) verbindet.

2. Einrichtung nach Anspruch 1, dadurch gekennzeichnet, dass der Zylinder (40) in an sich bekannter Weise am Ende eines Zahnstangen-Lenkungsgehäuses (42) angeordnet ist, welche mittels eines Ritzels (43) betätigt wird, das auf einer Lenkwelle (44) angeordnet ist, welche wenigstens einen Drehmomentfühler (46) aufweist, der eine erste Serie von Signalen der elektronischen Steuereinheit (50) zuführt, während ein Geschwindigkeitsfühler für das Fahrzeug eine zweite Serie von Signalen derselben elektronischen Steuereinheit zuführt mit der Wirkung, dass die Steuergeschwindigkeit der Elektroventile (51, 52) verringert wird, wenn die Fahrzeuggeschwindigkeit zunimmt.

3. Zahnstangeneinrichtung nach Anspruch 2, dadurch gekennzeichnet, dass das Steuersignal der Elektroventile (51, 52) des Verteilers (31) Null ist, so lange das an der Lenkwelle gemessene Drehmoment nicht einen Wert erreicht hat, der eine zunehmende Funktion der Fahrzeuggeschwindigkeit ist.

## Claims

1. A hydraulic control system in particular for power steering comprising an electro-hydraulic distributor (31) controlled by two electrically operated valves (51, 52) and which communicates by way of two working conduits (27, 28) respectively with one or other of the two chambers (29, 30) of a double-acting jack (40) and by way of a connecting conduit with a tank (2) and which comprises a spool (61) movable in a valve body (62), said spool (61) defining with the valve body (62) two end chambers (57, 58) which are respectively fed by a pilot control pressure governed by the open or closed state of one of the two electrically operated valves (51, 52) characterised in that the movable spool is urged into a neutral position solely by the delivery pressure of a pump and that the two electrically operated valves are controlled by the signals which are processed by an electronic control means (50) and the establishment of which acts on the spool (61) in the direction of a constriction in the flow, which communicates a supply duct of the distributor and a working conduit (27, 28) from the pump (1) with the connecting conduit (70) to the tank (2).

2. A system according to claim 1 characterised in that the jack (40) is mounted in per se known fashion at the end of a rack-type steering box (42) whose rack is actuated by way of a pinion (43) mounted on a steering column (44) which carries at least one torque detector (46) for delivering a first series of signals to the electronic control means (50) while a detector for detecting the speed of the vehicle delivers a second series of signals to the same electronic control means, the effect of which is to reduce the control reference of the electrically operated valves (51, 52) when the speed of the vehicle increases.

3. A rack-type system according to claim 2 characterised in that the signal for controlling the electrically operated valves (51, 52) of the distributor (31) is zero as long as the torque detected at the steering column does not reach a value which is a rising function of the speed of the vehicle.

F I G.1

0115464

FIG.2

9

FIG.3